# EUROPÄISCHE PATENTSCHRIFT

(11) **EP 3 837 080 B1**
(45) Veröffentlichungstag und Bekanntmachung des Hinweises auf die Patenterteilung: **05.10.2022**
(21) Anmeldenummer: 19749753.0
(22) Anmeldetag: 12.08.2019
(51) Int. Cl.: B23K 9/173, B23K 9/26, B23K 9/28, B23K 9/29

(54) **ZWEIDRAHTSCHWEISSBRENNER MIT MEHREREN PAAREN ZWEIER DÜSENSTOCKAUFNAHMEN**
TWO WIRE WELDING BURNER FOR TWO FUSING WELDING WIRES WITH A PLURALITY OF PAIRS OF NOZZLE STICK HOLDERS
TORCHE DE SOUDAGE POUR DEUX FILS DE SOUDURE FUSIBLES AVEC PLUSIEURS PAIRES DE DISPOSITIFS RÉCEPTEURS DE PORTE-BUSE

(30) Priorität: 13.08.2018 EP 18188660
(43) Veröffentlichungstag der Anmeldung: 23.06.2021
(73) Patentinhaber: FRONIUS INTERNATIONAL GmbH, 4643 Pettenbach (AT)
(72) Erfinder: GROSSAUER, Wolfgang, 4643 Pettenbach (AT)
(74) Vertreter: SONN Patentanwälte OG
(86) Internationale Anmeldenummer: PCT/EP2019/071545
(87) Internationale Veröffentlichungsnummer: WO 2020/035435

(56) Entgegenhaltungen:
- EP-A2- 1 077 102
- GB-A- 1 450 912
- JP-A- 2006 289 381
- JP-A- 2010 036 241
- JP-A- 2013 039 624
- US-A1- 2008 169 336

## Beschreibung

Die Erfindung betrifft einen Zweidrahtschweißbrenner für zwei abschmelzende Schweißdrähte, mit einem Brennerkörper mit einem Anschluss für ein Schlauchpaket und mit zwei Düsenstockaufnahmen zur Aufnahme jeweils von Düsenstöcken mit darin anordenbaren Kontaktrohren zur Führung der Schweißdrähte, und mit einer gemeinsamen Gasdüse, wobei im Brennerkörper ein Anschluss für den Zulauf eines Kühlfluids und ein Anschluss für den Ablauf des Kühlfluids angeordnet ist.

Die vorliegende Beschreibung ist auf einen Zweidrahtschweißbrenner für zwei abschmelzende Schweißdrähte gerichtet. Eine Erweiterung auf einen Drei- oder Mehrdrahtschweißbrenner ist im Rahmen der Erfindung denkbar.

Derartige Zwei- oder Mehrdrahtschweißbrenner werden für Schweißaufgaben mit erhöhter Abschmelzleistung verwendet, um eine höhere Schweißgeschwindigkeit und damit eine erhöhte Produktivität zu erreichen. Dabei brennen zwischen zwei Schweißdrähten, welche durch zwei getrennte Kontaktrohre geführt werden, zwei elektrisch unabhängige Lichtbögen in einem gemeinsamen Schmelzbad. Durch die Zuführung zweier Schweißdrähte, welche aus dem selben oder auch aus unterschiedlichem Material und in gleichem oder unterschiedlichem Durchmesser vorliegen können, wird ein höheres Volumen an Zusatzmaterial, welches in den Spalt zwischen zwei zu verschweißende Werkstücke eingebracht oder auf das zu schweißende Werkstück aufgetragen wird, erzielt.

Beispielsweise beschreibt die US 2012/0055911 A1 einen Zweidrahtschweißbrenner der gegenständlichen Art, der sich durch besonders kompakte Bauweise auszeichnen soll.

Üblicherweise sind die Kontaktrohre zur Führung der Schweißdrähte fix parallel oder in einem vorgegebenen Winkel zueinander angeordnet. Wenn eine Schweißung mit einer anderen Stellung der Kontaktrohre zueinander durchgeführt werden soll, muss ein entsprechender dafür ausgelegter Schweißbrenner verwendet werden.

Aus der GB 1 450 912 A (Basis für den Oberbegriff des Anspruchs 1), der US 2008/169336 A1, der JP 2006 289381 A, der JP 2010 036241 A, der EP 1 077 102 A2 oder der JP 2013 039624 A gehen verschiedene Zweidrahtschweißbrenner hervor, bei denen ein Wechsel des Winkels der beiden Schweißdrähte zueinander jedoch nicht oder nur mit größerem Aufwand möglich ist. Die Aufgabe der Erfindung besteht in der Schaffung eines Zweidrahtschweißbrenners mit zwei Düsenstockaufnahmen, der eine Umrüstung auf unterschiedliche Ausrichtungen der Kontaktrohre bzw. Schweißdrähte zueinander in einfacher und kostengünstiger Weise zulässt. Nachteile bekannter Zweidrahtschweißbrenner sollen vermieden oder zumindest reduziert werden.

Die erfindungsgemäße Aufgabe wird dadurch gelöst, dass der Brennerkörper zwei Schnittstellen zur Aufnahme und Befestigung eines Paars zweier Düsenstockaufnahmen aufweist, und die Düsenstockaufnahmen jedes Paars zweier Düsenstockaufnahmen als Einsätze ausgebildet sind und jeweils eine Öffnung für die Aufnahme jeweils eines Düsenstocks aufweisen, welche Öffnungen in einem Winkel zwischen 0° und 20° zueinander angeordnet sind, und dass mehrere Paare jeweils zweier Düsenstockaufnahmen mit unterschiedlichen Winkeln der Öffnungen zueinander vorgesehen sind, sodass bei Wechsel lediglich des Paars zweier Düsenstockaufnahmen der Winkel der Kontaktrohre zueinander veränderbar ist, und dass die Düsenstockaufnahmen jeweils zumindest einen Kühlkanal aufweisen, wobei der zumindest eine Kühlkanal in jeder Düsenstockaufnahme mit dem Anschluss für den Ablauf des Kühlfluids im Brennerkörper über einen in der Gasdüse angeordneten Kühlkanal miteinander verbunden sind. Dadurch, dass im Brennerkörper ein Anschluss für den Zulauf eines Kühlfluids und ein Anschluss für den Ablauf des Kühlfluids angeordnet ist, welche über einen in der Gasdüse angeordneten Kühlkanal miteinander verbunden sind, kann eine optimale Kühlung der Gasdüse und allenfalls dazwischenliegender Komponenten des Zweidrahtschweißbrenners durchgeführt werden. Als Kühlfluid kommt insbesondere Kühlwasser oder andere Kühlflüssigkeiten zur Anwendung. Die Verwendung von Gasen zur Kühlung des Zweidrahtschweißbrenners ist ebenso denkbar. Die Düsenstockaufnahmen weisen jeweils zumindest einen Kühlkanal auf, welcher mit dem Anschluss für den Zulauf des Kühlfluids und dem Anschluss für den Ablauf des Kühlfluids im Brennerkörper verbindbar ist. Auf diese Weise kann eine optimale Kühlung der Düsenstockaufnahmen sowie der darin angeordneten Düsenstöcke und Kontaktrohre erfolgen und die Wärme entsprechend abgeführt werden. Der Verlauf des Kühlfluids kann derart erfolgen, dass beispielsweise zuerst die Gasdüse und danach die Düsenstockaufnahmen gekühlt werden. Die Reihenfolge des Verlaufs des Kühlfluids kann entsprechend beliebig sein bzw. an die jeweilige Anwendung angepasst werden. Wesentlich ist, dass die Kühlkanäle quasi in Serie hintereinander geschaltet sind. Zur Abdichtung der Kühlkanäle der Düsenstockaufnahmen sind vorzugsweise entsprechende O-Ringe oder dgl. angeordnet. Somit kann durch den Kauf und die Lagerung verschiedener Düsenstockaufnahmepaare und allenfalls dazu gehörender Gasverteiler ein Set von Zweidrahtschweißbrennern für verschiedene Schweißaufgaben zur Verfügung gestellt werden, ohne dass sämtliche Komponenten des Zweidrahtschweißbrenners doppelt oder mehrfach erworben werden müssen. Erfindungsgemäß brauchen lediglich die Düsenstockaufnahmen, welche als Einsatz ausgebildet sind, ausgetauscht werden, um einen anderen Winkel der Kontaktrohre zueinander bzw. Schweißdrähte zueinander erzielen zu können. Der Wechsel ist relativ rasch und einfach durchführbar und die verschiedenen Düsenstockaufnahmepaare mit unterschiedlichen Winkeln der Öffnungen können sehr billig und einfach hergestellt werden. Für verschiedene Winkel der Kontaktrohre bzw. Schweißdrähte zueinander ist es nicht mehr notwendig, verschiedene Schweißbrenner bereitzustellen.

Vorteilhafterweise sind die Öffnungen der Düsenstockaufnahmen symmetrisch in einem Winkel zu einer Winkelsymmetralen zueinander orientiert. Bei diesem üblichen symmetrischen Aufbau des Schweißbrenners können die Düsenstockaufnahmen identisch aufgebaut und hergestellt sein und bloß spiegelverkehrt in den Schnittstellen des Zweidrahtschweißbrenners angeordnet werden.

Gemäß einem Merkmal der Erfindung beträgtder Winkel der Öffnungen der Düsenstockaufnahmen zueinander 0°, 4°, 8° und 11,5°. Derartige Winkel haben sich für verschiedene Schweißanwendungen als besonders geeignet herausgestellt.

Wenn auch die Düsenstöcke zumindest einen Kühlkanal aufweisen, welcher mit den Kühlkanälen der Düsenstockaufnahmen verbindbar ist, können auch die Düsenstöcke und bis zu einem gewissen Grad auch die darin angeordneten Kontaktrohre gekühlt und die Wärme besser abgeführt werden. Die Kühlkanäle der Düsenstöcke, Düsenstockaufnahmen und der Gasdüse werden je nach Wunsch seriell miteinander zusammengeschaltet, wobei darauf Rücksicht genommen wird, dass die empfindlicheren Komponenten des Zweidrahtschweißbrenners zuerst vom Kühlfluid durchströmt werden.

Die Düsenstockaufnahmen können in einfacher Weise über Schrauben an den Schnittstellen des Brennerkörpers befestigt werden. Dies stellt eine einfache und kostengünstige Konstruktionsmöglichkeit dar. Die entsprechend gestalteten Schrauben können zum Umrüsten des Zweidrahtschweißbrenners auf einen anderen Winkel zwischen den Kontaktrohren bzw. Schweißdrähten auch relativ rasch geöffnet und wieder geschlossen werden. Natürlich sind auch andere Verbindungsarten wie z.B. werkzeuglos bedienbare Schnellverschlüsse oder dgl., denkbar.

Vorteilhafterweise sind die Düsenstöcke über O-Ringe gegenüber den Düsenstockaufnahmen abgedichtet. Durch derartige O-Ringe kann das Austreten des üblicherweise durch das Innere der Düsenstöcke und Kontaktröhre strömenden Schutzgases verhindert werden. Die O-Ringe sind aus geeignetem elastischen Material hergestellt, das den in einem Schweißbrenner üblicherweise auftretenden Temperaturen standhält.

Gemäß einem weiteren Merkmal der Erfindung ist ein Gasverteiler mit zwei Öffnungen für die Aufnahme der Düsenstöcke und mehreren Löchern zur Führung eines Schutzgases vorgesehen, wobei die Öffnungen zur Aufnahme der Düsenstöcke entsprechend dem Winkel der Öffnungen der Düsenstockaufnahmen zueinander orientiert sind. Ein derartiger Gasverteiler dient dazu, das Schutzgas optimal zu verteilen, sodass an der Mündung der Gasdüse ein gleichmäßiger Schutzgasstrom resultiert, der die Lichtbögen des Zweidrahtschweißbrenners entsprechend umgibt. So wie das Paar zweier Düsenstockaufnahmen ist für jeden gewünschten Winkel der Kompaktrohre bzw. Schweißdrähte zueinander ein eigener Gasverteiler notwendig, der die unterschiedlichen Winkel der Düsenstöcke zueinander entsprechend berücksichtigt.

Der Gasverteiler ist vorzugsweise aus einem geeigneten temperaturbeständigem Kunststoff gebildet.

Wenn am Brennerkörper ein schwenkbarer Fixierbügel zur werkzeuglosen Befestigung der Gasdüse vorgesehen ist, kann die Gasdüse besonders einfach und rasch vom Brennerkörper entfernt werden, um die dahinter liegenden Komponenten, wie z.B. die Düsenstockaufnahmen, Düsenstöcke, Kompaktrohre und den Gasverteiler, einfach tauschen zu können. In der verschlossenen Position sollte der Fixierbügel entsprechend einrasten, um ein ungewolltes Lösen der Gasdüse vom Brennerkörper verhindern zu können.

Die Gasdüse kann zweiteilig ausgebildet sein und einen Gasdüsengrundkörper und ein damit lösbar verbundenes Gasdüsenmundstück aufweisen. Auf diese Weise kann der den Lichtbögen zugewandte Teil der Gasdüse, das Gasdüsenmundstück, welches einem höheren Verschleiß ausgesetzt ist, öfter getauscht werden, wohingegen der Gasdüsengrundkörper länger eingesetzt werden kann. Darüber hinaus ist durch die zweiteilige Ausbildung der Gasdüse eine Herstellung der einzelnen Teile aus unterschiedlichem Material möglich. Die Kühlung der Gasdüse durch einen entsprechenden Kühlkanal kann so erfolgen, dass der Kühlkanal in der Trennebene zwischen Gasdüsengrundkörper und Gasdüsenmundstück angeordnet ist und bei entsprechend zusammengebauter Gasdüse beide Teile gekühlt werden können.

Dabei ist das Gasdüsenmundstück vorzugsweise über einen Drahtbügel mit dem Gasdüsengrundkörper lösbar verbunden. Durch diese Maßnahme kann ein rascher und einfacher Tausch des Gasdüsenmundstücks, welches üblicherweise rascher verschleißt, durchgeführt werden.

Das der Gasdüse zugewandte Ende des Brennerkörpers weist einen im Wesentlichen rechteckigen Querschnitt auf und das dem Anschluss für das Schlauchpaket zugewandte Ende des Brennerkörpers weist einen im Wesentlichen runden Querschnitt auf. Diese Bauweise des Brennerkörpers ist hinsichtlich der Bedienung des Zweidrahtschweißbrenners vorteilhaft. Der rechteckige Querschnitt des freien Endes des Zweidrahtschweißbrenners kann je nach Ausführung des Zweidrahtschweißbrenners quer oder hochkant angeordnet sein, sodass die beiden Kontaktrohre während der Schweißung entweder nebeneinander oder hintereinander angeordnet sind. Auf diese Weise können entweder breite Schweißnähte zur Überbrückung breiter Spalte zwischen Werkstücken oder schmälere und tiefere Schweißdrähte gebildet werden.

Der Brennerkörper kann beispielsweise aus Epoxidharz gebildet sein. Dieses Material hat sich zur Herstellung von Schweißbrennern besonders geeignet und weist eine ausreichende Temperaturbeständigkeit auf. Natürlich sind auch andere isolierende Materialien möglich.

Die Erfindung wird anhand der beigefügten Zeichnungen näher erläutert. Darin zeigen
- Fig. 1: eine Ansicht auf eine Ausführungsform eines Zweidrahtschweißbrenners gemäß der vorliegenden Erfindung;
- Fig. 2: eine Ansicht auf das für eine Verbindung mit einem entsprechenden Schlauchpaket ausgebildete Ende des Zweidrahtschweißbrenners gemäß Fig. 1;
- Fig. 3: eine Explosionsdarstellung des Zweidrahtschweißbrenners gemäß Fig. 1;
- Fig. 4: ein Schnittbild durch einen Teil des vorderen Endes des Zweidrahtschweißbrenners gemäß Fig. 1;
- Fig. 5: ein Schnittbild des vorderen Endes des Zweidrahtschweißbrenners; und
- Fig. 6A bis 6D: verschiedene Ausführungsformen der Düsenstockaufnahmen und Gasverteiler eines erfindungsgemäßen Zweidrahtschweißbrenners gemäß Fig. 1.

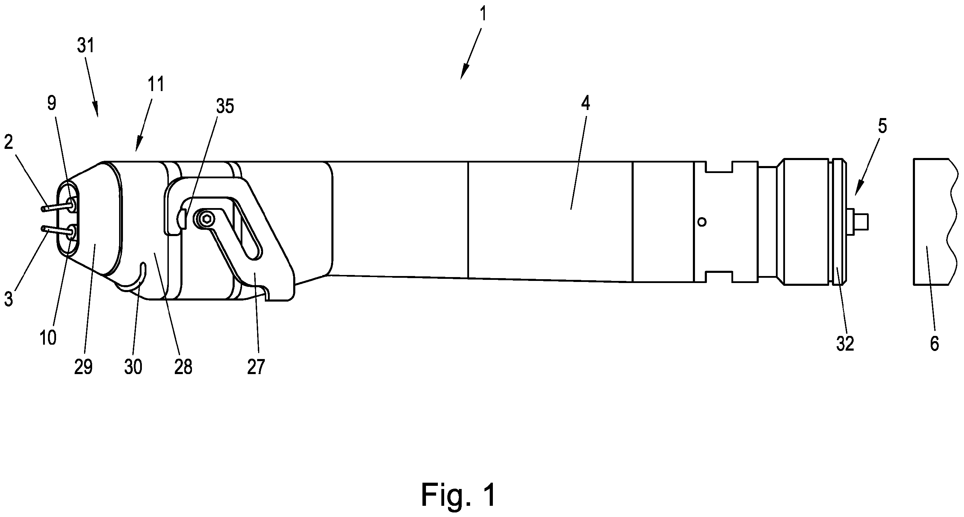

In Fig. 1 ist eine Ausführungsform eines Zweidrahtschweißbrenners 1 gemäß der vorliegenden Erfindung dargestellt. Der Zweidrahtschweißbrenner 1 umfasst einen Brennerkörper 4 mit einem Anschluss 5 für ein Schlauchpaket 6, welches die entsprechenden elektrischen Zuführungen für die Schweißdrähte 2, 3 und das Schutzgas sowie allfällige Steuerleitungen (nicht dargestellt) enthält. Die Verbindung zwischen dem Anschluss 5 für das dem Schlauchpaket 6 zugewandten Ende 32 des Brennerkörpers 4 und dem Schlauchpaket 6 erfolgt üblicherweise durch eine entsprechende Steckverbindung, die besonders rasch und einfach angeschlossen und wieder demontiert werden kann. Der Zweidrahtschweißbrenner 1 weist am anderen Ende 31 eine Gasdüse 11 auf, welche über einen schwenkbaren Fixierbügel 27 am Brennerkörper 4 befestigt werden kann. Der Zweidrahtschweißbrenner 1 beinhaltet zwei Kompaktrohre 9, 10 zur Führung zweier Schweißdrähte 2, 3. Mithilfe eines derartigen Zweidrahtschweißbrenners 1 können Schweißungen mit höherer Abschmelzleistung hergestellt werden. Die Gasdüse 11 ist im dargestellten Ausführungsbeispiel zweiteilig ausgebildet und besteht aus einem Gasdüsengrundkörper 28 und einem Gasdüsenmundstück 29, welche über einen Drahtbügel 30 miteinander verbunden sind.

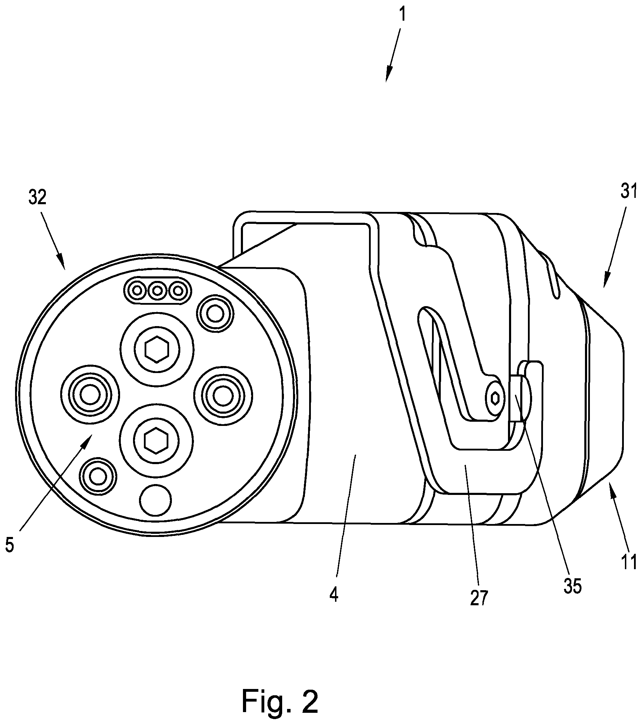

Fig. 2 zeigt eine Ansicht auf das für eine Verbindung mit einem entsprechenden Schlauchpaket 6 ausgebildete Ende 32 des Zweidrahtschweißbrenners 1 gemäß Fig. 1. In dieser Ansicht des Zweidrahtschweißbrenners erkennt man das im Wesentlichen rund ausgebildete Ende 32 des Zweidrahtschweißbrenners 1 bzw. den Anschluss 5 zur Verbindung mit einem Schlauchpaket 6 (s. Fig. 1). Der Anschluss 5 beinhaltet die elektrischen Anschlüsse zur Übertragung des Schweißstroms an die die Schweißdrähte 2, 3 führenden Kontaktrohre 9, 10, Zuleitungen und Ableitungen für ein Kühlfluid, Steuerleitungen sowie Anschlüsse zur Übermittlung eines Schutzgases.

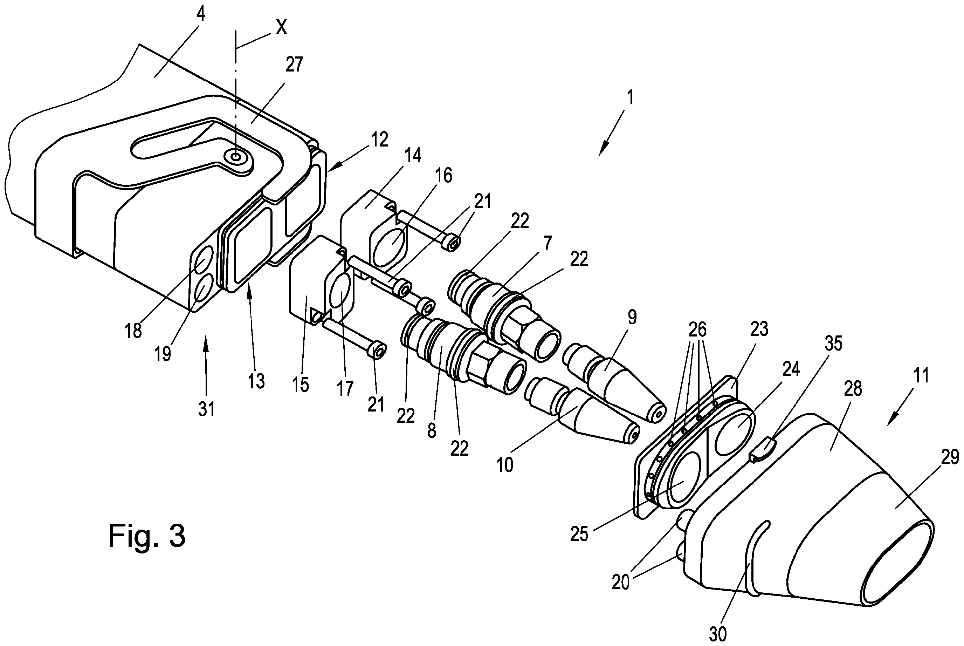

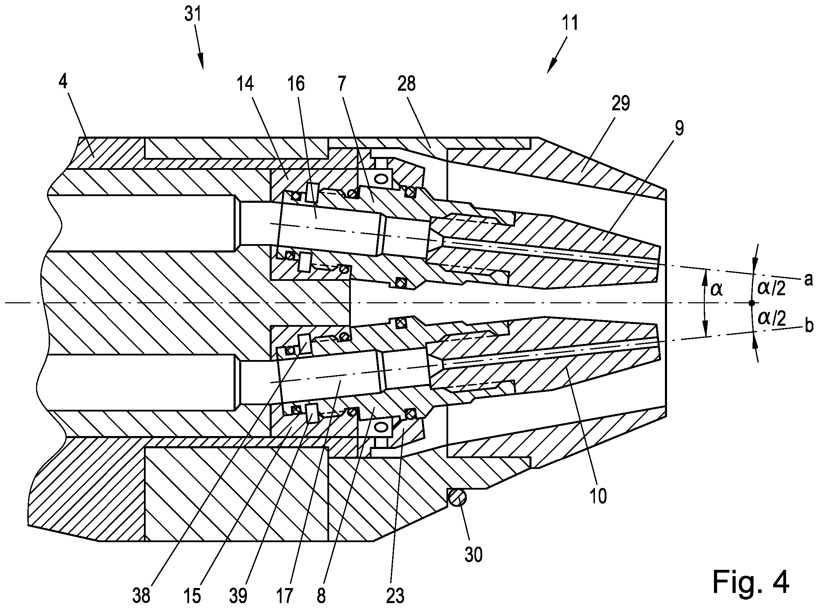

Aus der Explosionsdarstellung des Zweidrahtschweißbrenners 1 gemäß Fig. 3 sind die Einzelteile besser ersichtlich. In dieser Darstellung sind die wesentlichen Komponenten des gegenständlichen Zweidrahtschweißbrenners 1 erkennbar. Demgemäß weist der Brennerkörper 4 an dem der Gasdüse zugewandten Ende 31, welches vorzugsweise rechteckigen Querschnitt aufweist, zwei Schnittstellen 12, 13 zur Aufnahme zweier Düsenstockaufnahmen 14, 15 auf, welche Düsenstockaufnahmen als Einsätze auswechselbar ausgebildet sind. Die Düsenstockaufnahmen 14, 15 können beispielsweise über Schrauben 21 mit den Schnittstellen 12 bzw. 13 verbunden werden. Die Düsenstockaufnahmen 14, 15 weisen jeweils eine Öffnung 16, 17 für die Aufnahme jeweils eines Düsenstocks 7, 8 auf, welche Öffnungen 16, 17 in einem Winkel α zwischen 0 und 20° zueinander angeordnet sind. Werden die Düsenstöcke 7, 8 und die damit verbindbaren Kontaktrohre 9, 10 in die entsprechenden Öffnungen 16, 17 der Düsenstockaufnahmen 14, 15 angeordnet, so schließen die Mittelachsen a, b der Kontaktrohre 9, 10 bzw. die darin verlaufenden Schweißdrähte 2, 3 zueinander diesen Winkel α ein (s. Fig. 4). Obgleich asymmetrische Konstruktionen denkbar sind, bei welchen die Winkel der Öffnungen 16, 17 der beiden Düsenstockaufnahmen 14, 15 unterschiedlich ausgebildet sein können, ist eine symmetrische Anordnung, bei der die Öffnungen 16, 17 beider Düsenstockaufnahmen 14, 15 symmetrisch zu einer Winkelsymmetralen orientiert sind, üblich. Dadurch können theoretisch die Düsenstockaufnahmen 14, 15 identisch hergestellt und lediglich spiegelverkehrt den Schnittstellen 12 bzw. 13 angeordnet werden. Bei der symmetrischen Anordnung weisen beide Öffnungen 16, 17 der Düsenstockaufnahmen 14, 15 den halben Winkel α/2 zur Winkelsymmetralen auf.

Somit kann durch bloßen Austausch eines Paars an Düsenstockaufnahmen 14, 15 ein neuer Zweidrahtschweißbrenner 1 geschaffen werden mit einem anderen Winkel α der Mittelachsen der Kontaktrohre 9, 10 bzw. der darin verlaufenden Schweißdrähte 2, 3 zueinander. Übliche Winkel betragen 0°, 4°, 8° und 11,5°.

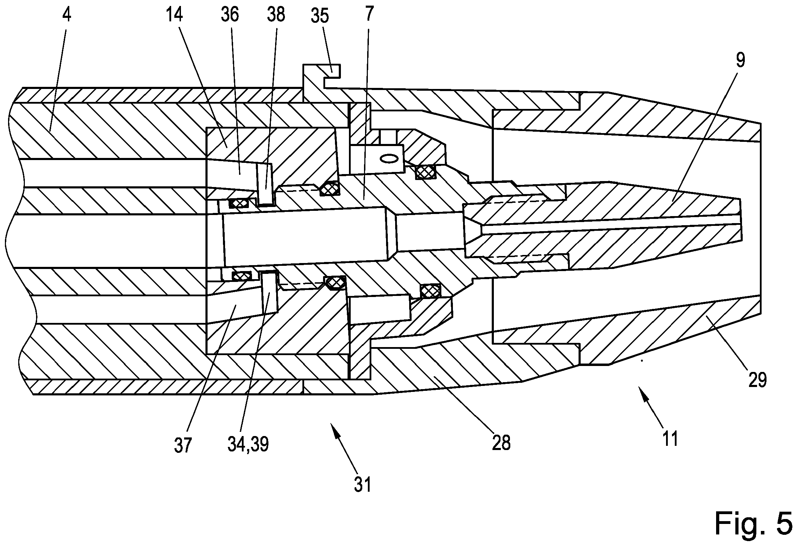

Vorzugsweise sind am Ende 31 des Brennerkörper 4, welcher vorzugsweise rechteckigen Querschnitt aufweist, sowohl ein Anschluss 18 für den Zulauf eines Kühlfluids als auch ein Anschluss 19 für den Ablauf des Kühlfluids angeordnet. Die Anschlüsse 18, 19 sind dabei im Wesentlichen übereinander und seitlich der Schnittstellen 12, 13. Das Ende 31 des Brennerkörpers mit vorzugsweise rechteckigem Querschnitt weist somit die beiden Schnittstellen 12, 13 und einen Bereich für die Anschlüsse 18, 19 des Kühlfluids auf. Über die Anschlüsse 18, 19 wird ein in der Gasdüse 11 angeordneter Kühlkanal 20 mit dem Kühlfluid versorgt und entsprechend lösbar miteinander verbunden. Dazu weisen die Anschlüsse 18, 19 entsprechende Dichtungen und bzw. oder einen sogenannten Fluidstopp (nicht dargestellt) auf, sodass beim Lösen der Verbindung, also beim Abnehmen der Gasdüse 11 vom Brennerkörper 4 ein Austritt des Kühlfluids verhindert wird. Auf diese Weise kann eine optimale Kühlung der Gasdüse 11 erfolgen. Wenn zusätzlich die Düsenstockaufnahme 14, 15 und allenfalls die Düsenstöcke 7, 8 Kühlkanäle 33, 34 aufweisen, können auch diese Komponenten optimal gekühlt werden (s. dazu Fig. 5) .

Wie bereits oben erwähnt, kann die Gasdüse 11 zweiteilig ausgebildet sein und ein Gasdüsenmundstück 29 und einen Gasdüsengrundkörper 28 umfassen, die über einen Drahtbügel 30 miteinander lösbar verbunden werden können. Auf diese Weise kann das rascher verschleißende Gasdüsenmundstück 29 getrennt vom Gasdüsengrundkörper 28 getauscht werden. Die Gasdüse 11 wird vorzugsweise über einen schwenkbaren Fixierbügel 27 werkzeuglos mit dem Brennerkörper 4 verbunden. Der Fixierbügel 27 ist dabei am Ende 31 des Brennerkörpers mit dem vorzugsweise rechteckigen Querschnitt so befestigt, dass er um die Drehachse X verschwenkt werden kann. Zur Fixierung weist die Gasdüse 11 beidseitig entsprechende Vorsprünge 35 auf, welche der Fixierbügel 27 in der fixierten Position entsprechend hält bzw. umschließt.

Zur Erzielung der gewünschten Dichtheit sowohl für das durchströmende Schutzgas als auch das allfällige Kühlfluid sind an verschiedenen Komponenten, insbesondere den Düsenstöcken 7, 8, O-Ringe 22 angeordnet.

Für die optimale Verteilung eines Schutzgases kann ein Gasverteiler 23 mit zwei Öffnungen 24, 25 für die Aufnahme der Düsenstöcke 7, 8 vorgesehen sein. Der Gasverteiler 23, der vorzugsweise aus einem geeigneten temperaturbeständigen Kunststoffmaterial gebildet wird, weist für die Verteilung des Schutzgases entsprechende Löcher 26 auf. Die beiden Öffnungen 24, 25 sind entsprechend den Düsenstockaufnahme 14, 15 in einem Winkel α zueinander orientiert. Somit kann bei Verwendung eines Gasverteilers 23 auch dieser für verschiedene Winkel α bereitgestellt und gegebenenfalls befestigt werden.

Fig. 4 zeigt ein Schnittbild durch einen Teil des vorderen Endes 31 des Zweidrahtschweißbrenners 1. In dieser geschnittenen Darstellung des Endes des Zweidrahtschweißbrenners 1 sind die in einem Winkel angeordneten Öffnungen 16, 17 in den Düsenstockaufnahmen 14, 15 entsprechend erkennbar.

Fig. 5 zeigt ein Schnittbild des vorderen Endes 31 des Zweidrahtschweißbrenners 1. In diesem Schnittbild kann man einen allfälligen Kühlkanal 33 in der Düsenstockaufnahme 14 sowie einen allfälligen Kühlkanal 34 im Düsenstock 7 erkennen. Gemäß einer bevorzugten Ausführungsvariante weist der Kühlkanal 33 in der Düsenstockaufnahme 14 einen Vorlauf 36 und einen Rücklauf 37 auf, welche bevorzugt gegenüberliegend angeordnet und im Wesentlichen als Bohrung ausgebildet sind. Der Vorlauf 36 und der Rücklauf 37 werden über einen umlaufenden Kanal 38 in der Öffnung 16 der Düsenstockaufnahme 14 miteinander verbunden. Der Düsenstock 7, welcher in der Öffnung 16 der Düsenstockaufnahme 14 angeordnet wird, weist eine zu diesem umlaufenden Kanal 38 korrespondierende Nut 39 zur Führung des Kühlfluids auf, welche Nut 27 den Kühlkanal 34 im Düsenstock 7 bildet. Die Düsenstockaufnahme 15 und der Düsenstock 8 sind identisch aufgebaut. Das Kühlfluid verläuft beispielsweise vom Anschluss 18 durch den Kühlkanal 20 in der Gasdüse 11, anschließend durch den Kühlkanal 33 in der Düsenstockaufnahme 15 und dem Düsenstock 8 und danach durch den Kühlkanal 33 in der Düsenstockaufnahme 14 und dem Düsenstock 7, bevor das Kühlfluid über den Anschluss 19 am Ende des Brennerkörpers 4 zurückgeführt wird. Deshalb kann hier von einer Kühlung in Serie gesprochen werden, wobei bevorzugt die heißeste Komponente zuerst gekühlt wird und danach die weiteren Komponenten. In vielen Fällen ist die heißeste Komponente die in Schweißrichtung gesehen vorne angeordnete Düsenstockaufnahme. Je nach Anwendung könnte natürlich auch die Gasdüse 11 die heißeste Komponente sein.

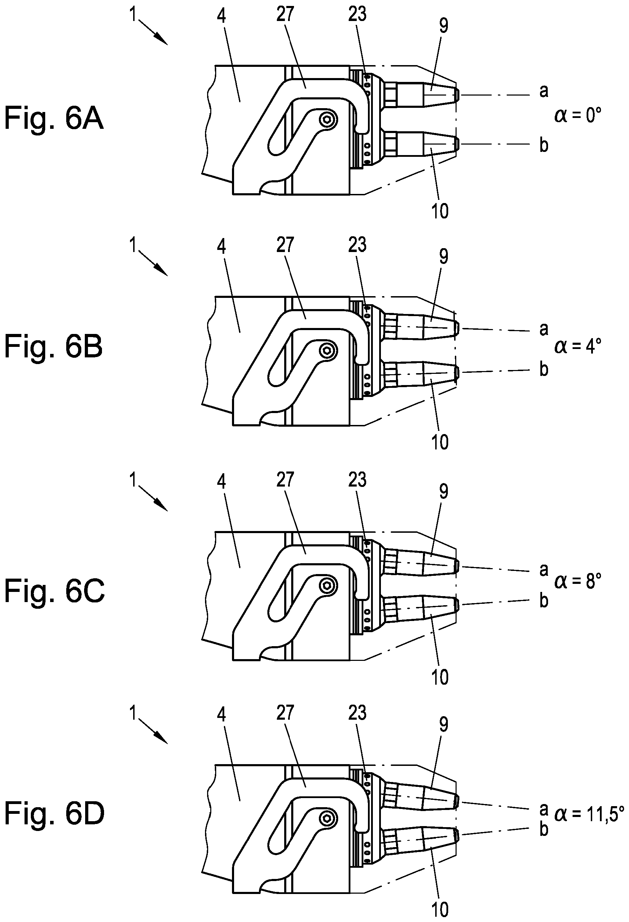

Fig. 6A bis 6D zeigen verschiedene Ausführungsformen der Düsenstockaufnahmen 14, 15 und Gasverteiler 23 für verschiedene Winkel α der Öffnungen 16, 17 der Düsenstockaufnahmen 14, 15 zueinander. Hier werden verschiedene Ausführungen des Zweidrahtschweißbrenners 1 dargestellt. Bei der Variante gemäß Fig. 6A sind die Düsenstockaufnahmen 14, 15 und der Gasverteiler 23 so gestaltet, dass die beiden Kontaktrohre 9, 10 parallel zueinander angeordnet sind, also in einem Winkel von 0° einschließen. Bei der Variante gemäß Fig. 6B schließen die Kontaktrohre 9, 10 bzw. die darin verlaufenden Schweißdrähte 2, 3 einen Winkel von 4° ein. Bei der Version gemäß Fig. 6C schließen die Kontaktrohr 9, 10 einen Winkel von α=8°, bei der Variante gemäß Fig. 6D einen Winkel von α=11,5° ein. Durch entsprechende Herstellung und Gestaltung der Düsenstockaufnahmen 14, 15 und des allfälligen Gasverteilers 23 können aber auch weitere Winkel realisiert werden, die für bestimmte Schweißverfahren, welche mit dem Zweidrahtschweißbrenner 1 ausgeführt werden, von Vorteil sein könnten.

## Patentansprüche

1. Zweidrahtschweißbrenner (1) für zwei abschmelzende Schweißdrähte (2, 3), mit einem Brennerkörper (4) mit einem Anschluss (5) für ein Schlauchpaket (6) und mit zwei Düsenstockaufnahmen (14, 15) zur Aufnahme jeweils von Düsenstöcken (7, 8) mit darin anordenbaren Kontaktrohren (9, 10) zur Führung der Schweißdrähte (2, 3), und mit einer gemeinsamen Gasdüse (11), wobei im Brennerkörper (4) ein Anschluss (18) für den Zulauf eines Kühlfluids und ein Anschluss (19) für den Ablauf des Kühlfluids angeordnet ist, **dadurch gekennzeichnet, dass** der Brennerkörper (4) zwei Schnittstellen (12, 13) zur Aufnahme und Befestigung eines Paars zweier Düsenstockaufnahmen (14, 15) aufweist, und die Düsenstockaufnahmen (14, 15) jedes Paars zweier Düsenstockaufnahmen (14, 15) als Einsätze ausgebildet sind und jeweils eine Öffnung (16, 17) für die Aufnahme jeweils eines Düsenstocks (7, 8) aufweisen, welche Öffnungen (16, 17) in einem Winkel (α) zwischen 0° und 20° zueinander angeordnet sind, sodass die Mittelachsen (a, b) der Kontaktrohre (9, 10) bzw. die darin verlaufenden Schweißdrähte (2, 3) zueinander diesen Winkel (α) einschließen, und dass mehrere Paare jeweils zweier Düsenstockaufnahmen (14, 15) mit unterschiedlichen Winkeln (α) der Öffnungen (16, 17) zueinander vorgesehen sind, und dass die Düsenstockaufnahmen (14, 15) jeweils zumindest einen Kühlkanal (33) aufweisen, wobei der zumindest eine Kühlkanal (33) in jeder Düsenstockaufnahmen (14, 15) mit dem Anschluss (18) für den Zulauf des Kühlfluids und dem Anschluss (19) für den Ablauf des Kühlfluids im Brennerkörper (4) über einen in der Gasdüse (11) angeordneten Kühlkanal (20) miteinander verbunden sind.

2. Zweidrahtschweißbrenner (1) nach Anspruch 1, **dadurch gekennzeichnet, dass** die Öffnungen (16, 17) der Düsenstockaufnahmen (14, 15) symmetrisch zu einer Winkelsymmetralen in dem Winkel (α) zueinander orientiert sind.

3. Zweidrahtschweißbrenner (1) nach Anspruch 1 oder 2, **dadurch gekennzeichnet, dass** der Winkel (α) der Öffnungen (16, 17) der Düsenstockaufnahmen (14, 15) zueinander 0°, 4°, 8° und 11,5° beträgt.

4. Zweidrahtschweißbrenner (1) nach einem der Ansprüche 1 bis 3, **dadurch gekennzeichnet, dass** die Düsenstöcke (7, 8) jeweils zumindest einen Kühlkanal (34) aufweisen, welcher mit den Kühlkanälen (33) der Düsenstockaufnahmen (14, 15) verbindbar ist.

5. Zweidrahtschweißbrenner (1) nach einem der Ansprüche 1 bis 4, **dadurch gekennzeichnet, dass** die Düsenstockaufnahmen (14, 15) über Schrauben (21) an den Schnittstellen (12, 13) befestigbar sind.

6. Zweidrahtschweißbrenner (1) nach einem der Ansprüche 1 bis 5, **dadurch gekennzeichnet, dass** die Düsenstöcke (7, 8) über O-Ringe (22) gegenüber den Düsenstockaufnahmen (14, 15) abgedichtet sind.

7. Zweidrahtschweißbrenner (1) nach einem der Ansprüche 1 bis 6, **dadurch gekennzeichnet, dass** ein Gasverteiler (23) mit zwei Öffnungen (24, 25) für die Aufnahme der Düsenstöcke (7, 8) und mehreren Löchern (26) zur Führung eines Schutzgases vorgesehen ist, wobei die Öffnungen (24, 25) zur Aufnahme der Düsenstöcke (7, 8) entsprechend dem Winkel (α) der Öffnungen (16, 17) der Düsenstockaufnahmen (14, 15) zueinander orientiert sind.

8. Zweidrahtschweißbrenner (1) nach einem der Ansprüche 1 bis 7, **dadurch gekennzeichnet, dass** am Brennerkörper (4) ein schwenkbarer Fixierbügel (27) zur werkzeuglosen Befestigung der Gasdüse (11) vorgesehen ist.

9. Zweidrahtschweißbrenner (1) nach einem der Ansprüche 1 bis 8, **dadurch gekennzeichnet, dass** die Gasdüse (11) einen Gasdüsengrundkörper (28) und ein damit lösbar verbundenes Gasdüsenmundstück (29) aufweist.

10. Zweidrahtschweißbrenner (1) nach Anspruch 9, **dadurch gekennzeichnet, dass** das Gasdüsenmundstück (29) über einen Drahtbügel (30) mit dem Gasdüsengrundkörper (28) lösbar verbunden ist.

11. Zweidrahtschweißbrenner (1) nach einem der Ansprüche 1 bis 10, **dadurch gekennzeichnet, dass** das der Gasdüse (11) zugewandte Ende (31) des Brennerkörpers (4) im Wesentlichen rechteckigen Querschnitt und das dem Anschluss (5) für das Schlauchpaket (6) zugewandte Ende (32) des Brennerkörpers (4) im Wesentlichen runden Querschnitt aufweist.

## Claims

1. Dual-wire welding torch (1) for two melting welding wires (2, 3), comprising a torch body (4) with a connection (5) for a hose package (6) and with two nozzle assembly receptacles (14, 15) for each receiving nozzle assemblies (7, 8) having contact tubes (9, 10), which can be arranged therein, for guiding the welding wires (2, 3), and comprising a common gas nozzle (11), a connection (18) for the supply of a cooling fluid and a connection (19) for the discharge of the cooling fluid being arranged in the torch body (4), **characterised in that** the torch body (4) has two interfaces (12, 13) for receiving and fastening a pair of two nozzle assembly receptacles (14, 15), and the nozzle assembly receptacles (14, 15) of each pair of two nozzle assembly receptacles (14, 15) are designed as inserts and each have an opening (16, 17) for receiving one nozzle assembly (7, 8) in each case, which openings (16, 17) are arranged at an angle (a) between 0° and 20° with respect to one another, such that the central axes (a, b) of the contact tubes (9, 10) or the welding wires (2, 3) extending therein enclose this angle (a) with respect to one another, and **in that** a plurality of pairs of two nozzle assembly receptacles (14, 15) with different angles (a) of the openings (16, 17) with respect to one another are provided, and **in that** the nozzle assembly receptacles (14, 15) each have at least one cooling channel (33), the at least one cooling channel (33) in each of the nozzle assembly receptacles (14, 15) with the connection (18) for the supply of the cooling fluid and the connection (19) for the discharge of the cooling fluid in the torch body (4) being interconnected via a cooling channel (20) arranged in the gas nozzle (11).

2. Dual-wire welding torch (1) according to claim 1, **characterised in that** the openings (16, 17) of the nozzle assembly receptacles (14, 15) are oriented with respect to one another symmetrically to an angle bisector at the angle (a).

3. Dual-wire welding torch (1) according to either claim 1 or claim 2, **characterised in that** the angle (a) of the openings (16, 17) of the nozzle assembly receptacles (14, 15) with respect to one another is 0°, 4°, 8° and 11.5°.

4. Dual-wire welding torch (1) according to any of claims 1 to 3, **characterised in that** the nozzle assemblies (7, 8) each have at least one cooling channel (34), which can be connected to the cooling channels (33) of the nozzle assembly receptacles (14, 15).

5. Dual-wire welding torch (1) according to any of claims 1 to 4, **characterised in that** the nozzle assembly receptacles (14, 15) can be fastened to the interfaces (12, 13) by means of screws (21).

6. Dual-wire welding torch (1) according to any of claims 1 to 5, **characterised in that** the nozzle assemblies (7, 8) are sealed with respect to the nozzle assembly receptacles (14, 15) by O-rings (22).

7. Dual-wire welding torch (1) according to any of claims 1 to 6, **characterised in that** a gas distributor (23) having two openings (24, 25) for receiving the nozzle assemblies (7, 8) and a plurality of holes (26) for conducting a protective gas is provided, the openings (24, 25) for receiving the nozzle assemblies (7, 8) being oriented with respect to one another according to the angle (a) of the openings (16, 17) of the nozzle assembly receptacles (14, 15).

8. Dual-wire welding torch (1) according to any of claims 1 to 7, **characterised in that** a pivotable fixing clip (27) for tool-free fastening of the gas nozzle (11) is provided on the torch body (4).

9. Dual-wire welding torch (1) according to any of claims 1 to 8, **characterised in that** the gas nozzle (11) has a gas nozzle main body (28) and a gas nozzle mouthpiece (29) detachably connected thereto.

10. Dual-wire welding torch (1) according to claim 9, **characterised in that** the gas nozzle mouthpiece (29) is detachably connected to the gas nozzle main body (28) by means of a wire clip (30).

11. Dual-wire welding torch (1) according to any of claims 1 to 10, **characterised in that** the end (31) of the torch body (4) facing the gas nozzle (11) has a substantially rectangular cross section and the end (32) of the torch body (4) facing the connection (5) for the hose package (6) has a substantially round cross section.

## Revendications

1. Torche de soudage à deux fils (1) pour deux fils de soudage consommables (2, 3), avec un corps de torche (4) avec un raccord (5) pour un ensemble de tuyaux (6) et avec deux organes de réception de porte-buses (14, 15) pour recevoir des porte-buses (7, 8) avec des tubes de contact (9, 10) pouvant y être agencés pour guider les fils de soudage (2, 3), et avec une buse à gaz commune (11), où un raccord (18) pour l'arrivée d'un fluide de refroidissement et un raccord (19) pour la sortie du fluide de refroidissement sont disposés dans le corps de torche (4), **caractérisée en ce que** le corps de torche (4) présente deux interfaces (12, 13) pour la réception et la fixation d'une paire de deux organes de réception de porte-buses (14, 15), et les organes de réception de porte-buses (14, 15) de chaque paire de deux organes de réception de porte-buses (14, 15) sont réalisés sous forme d'inserts et présentent chacun une ouverture (16, 17) pour la réception d'un porte-buse (7, 8) respectif, lesquelles ouvertures (16, 17) sont disposées l'une par rapport à l'autre sous un angle (α) entre 0° et 20°, de sorte que les axes (a, b) des tubes de contact (9, 10) ou les fils de soudage (2, 3) qui s'étendent dans ceux-ci forment cet angle (α) l'un par rapport à l'autre, et **en ce que** plusieurs paires de chacune deux organes de réception de porte-buses (14, 15) avec des angles (α) des ouvertures (16, 17) différents l'une par rapport à l'autre sont prévues, et **en ce que** les organes de réception de porte-buses (14, 15) présentent chacun au moins un canal de refroidissement (33), où le au moins un canal de refroidissement (33) dans chaque organe de réception de porte-buses (14, 15) avec le raccord (18) pour l'entrée du fluide de refroidissement et avec le raccord (19) pour la sortie du fluide de refroidissement dans le corps de torche (4) sont reliés l'un à l'autre par l'intermédiaire d'un canal de refroidissement (20) disposé dans la buse à gaz (11).

2. Torche de soudage à deux fils (1) selon la revendication 1, **caractérisée en ce que** les ouvertures (16, 17) des organes de réception de porte-buses (14, 15) sont orientées l'une par rapport à l'autre en une symétrie angulaire dans l'angle (α).

3. Torche de soudage à deux fils (1) selon la revendication 1 ou 2, **caractérisée en ce que** l'angle (a) des ouvertures (16, 17) des organes de réception de porte-buses (14, 15) entre elles est de 0°, 4°, 8° et 11,5°.

4. Torche de soudage à deux fils (1) selon l'une des revendications 1 à 3, **caractérisée en ce que** les porte-buses (7, 8) présentent chacun au moins un canal de refroidissement (34) qui peut être relié avec les canaux de refroidissement (33) des organes de réception de porte-buses (14, 15).

5. Torche de soudage à deux fils (1) selon l'une des revendications 1 à 4, **caractérisée en ce que** les organes de réception de porte-buses (14, 15) peuvent être fixés aux interfaces (12, 13) par des vis (21).

6. Torche de soudage à deux fils (1) selon l'une des revendications 1 à 5, **caractérisée en ce que** les porte-buses (7, 8) sont rendus étanches par rapport aux organes de réception de porte-buses (14, 15) par le biais de joints toriques (22).

7. Torche de soudage à deux fils (1) selon l'une des revendications 1 à 6, **caractérisée en ce qu'**un distributeur de gaz (23) avec deux ouvertures (24, 25) pour la réception des porte-buses (7, 8) et plusieurs trous (26) pour le guidage d'un gaz protecteur est prévu, où les ouvertures (24, 25) pour la réception des porte-buses (7, 8) sont orientées l'une par rapport à l'autre conformément à l'angle (a) des ouvertures (16, 17) des organes de réception de porte-buses (14, 15).

8. Torche de soudage à deux fils (1) selon l'une des revendications 1 à 7, **caractérisée en ce que** sur le corps de torche (4) est prévu un étrier de fixation pivotant (27) pour la fixation sans outil de la buse à gaz (11).

9. Torche de soudage à deux fils (1) selon l'une des revendications 1 à 8, **caractérisée en ce que** la buse à gaz (11) présente un corps de base de buse à gaz (28) et un embout de buse à gaz (29) relié de manière amovible à celui-ci.

10. Torche de soudage à deux fils (1) selon la revendication 9, **caractérisée en ce que** l'embout de buse à gaz (29) est relié de manière amovible au corps de base de buse à gaz (28) par le biais d'un étrier en fil (30).

11. Torche de soudage à deux fils (1) selon l'une des revendications 1 à 10, **caractérisée en ce que** l'extrémité (31) du corps de torche (4) tournée vers la buse à gaz (11) présente une section transversale sensiblement rectangulaire et l'extrémité (32) du corps de torche (4) tournée vers le raccord (5) pour l'ensemble de tuyaux (6) présente une section transversale sensiblement ronde.
